**Europäisches Patentamt**

**European Patent Office**

**Office européen des brevets**

(19)

(11) Veröffentlichungsnummer: **0 147 806**
**A2**

(12) # EUROPÄISCHE PATENTANMELDUNG

(21) Anmeldenummer: **84115978.3**

(22) Anmeldetag: **20.12.84**

(51) Int. Cl.⁴: **G 01 F 25/00**

(30) Priorität: **31.12.83 DE 3347695**

(43) Veröffentlichungstag der Anmeldung:
**10.07.85 Patentblatt 85/28**

(84) Benannte Vertragsstaaten:
**AT BE CH FR GB IT LI NL**

(71) Anmelder: **BOPP & REUTHER GMBH**
**Carl-Reuther-Strasse 1**
**D-6800 Mannheim 31(DE)**

(72) Erfinder: **Böhm, Jürgen, Dr.-Ing.**
**Krautheimerstrasse 11**
**D-68 Mannheim-Wallstadt(DE)**

(72) Erfinder: **Schad, Charles A.**
**6720 East 25th Place**
**Tulsa Oklahoma 74129(US)**

(54) **Prüfeinrichtung für Durchflussmesser.**

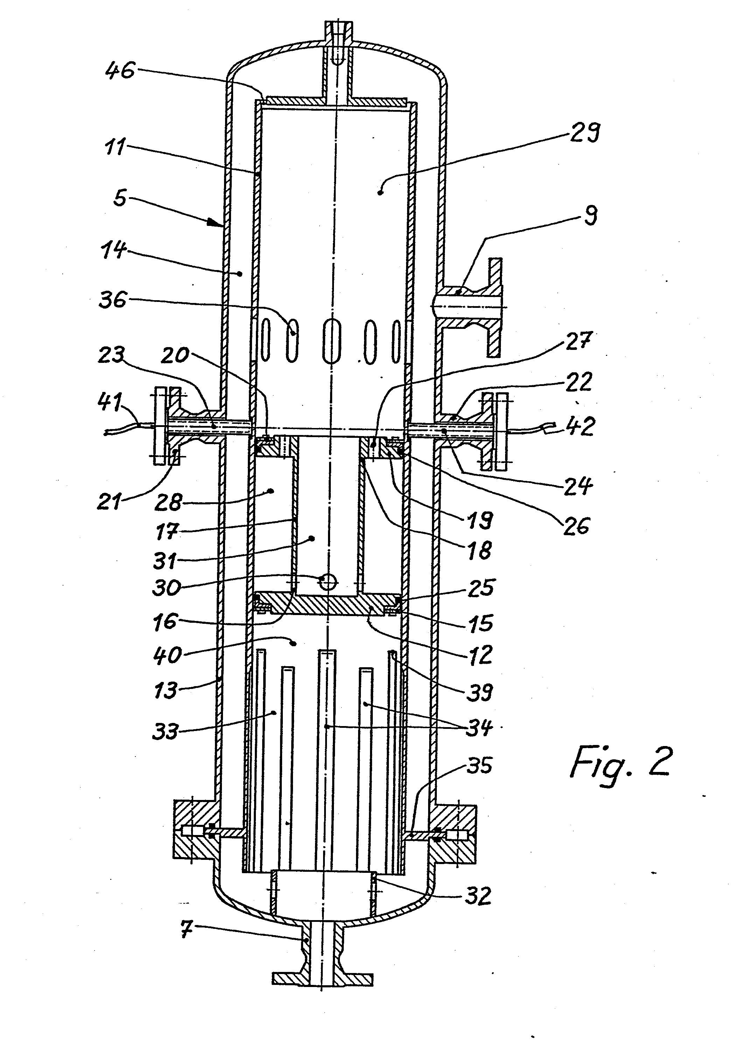

(57) Die Prüfeinrichtung für in eine Rohrleitung eingesetzte Durchflußmesser besteht aus einem in einer Bypaßleitung der Rohrleitung eingebauten Eichbehälter (5), der während des Meßzyklus durch ein Umschaltventil in Reihe mit dem Durchflußmesser geschaltet ist. Im Eichbehälter (5) gleitet ein von der zu messenden Flüssigkeit verdrängter Meßkolben (12), der einen Signalauslösering (15) trägt. In der Eichbehälterwand (13) ist ein Signalgeber (23) eingesetzt, der beim Vorbeibewegen des Signalauslöseringes (15) berührungslos den Stoppimuls für den Meßzyklus auslöst. Um die Prüfeinrichtung von unterschiedlichen Schaltverhalten bei der Signalgebung unabhängig zu machen, ist für das Start- und Stoppsignal nur ein Signalgeber (23) vorgesehen und der Meßkolben (12) ist über ein Distanzteil (17) fest mit einem zweiten Signalauslösering (20) verbunden, der beim Vorbeibewegen am Signalgeber (23) den Startimpuls für den Meßzyklus auslöst. Zwischen dem Start- und Stoppimpuls werden die vom zu prüfenden Durchflußmesser abgegebenen Zählimpulse aufaddiert und mit dem vom Meßkolben (12) verdrängten Eichvolumen in Beziehung gesetzt (Fig. 2).

./...

Fig. 2

. Bopp & Reuther

18. Dezember 1984
Pat Ju/ci 0147806
1282 EU

Prüfeinrichtung für Durchflußmesser

Die Erfindung bezieht sich auf eine Prüfeinrichtung für in eine Rohrleitung eingesetzte Durchflußmesser, die aus einem in einer Bypaßleitung der Rohrleitung eingebauten und durch ein Umschaltventil wahlweise in Reihe mit dem Durchflußmesser schaltbaren zylindrischen Eichbehälter besteht, in dem ein von der zu messenden Flüssigkeit verdrängter Meßkolben mit am Umfang vorgesehenem Signalauslösering gleitet, der jeweils beim Überfahren des Meßstreckenanfangs und -endes durch Zusammenwirken mit einem in der Eichbehälterwand sitzenden Signalgeber berührungslos einen Start- und Stoppimpuls auslöst, durch die die vom zu prüfenden Durchflußmesser abgegebenen Impulse aufaddiert und mit dem Eichvolumen der Meßstrecke in Beziehung gesetzt werden.

Bei einer solchen Prüfeinrichtung, wie sie z. B. aus der deutschen Gebrauchsmusterschrift 82 29 791 bekannt ist, ist ein Signalgeber am Anfang und ein weiterer Signalgeber am Ende der Behältermeßstrecke in die Eichbehälterwand eingebaut, von denen beim Vorbeibewegen des den Signalauslösering tragenden Meßkolbens der eine Signalgeber den Startimpuls und der andere Signalgeber den Stoppimpuls für die Aufaddierung der elektrischen Impulse des zu prüfenden Durchflußmessers auslöst.

Bei der bekannten Prüfeinrichtung hat sich gezeigt, daß der Startschalter nicht mit Sicherheit genau

- 2 -

das gleiche geometrische Schaltverhalten aufweist wie der Stoppschalter, wodurch infolge
unterschiedlicher Ansprechabstände die Meßgenauigkeit der Prüfeinrichtung verringert werden kann.
Abgesehen hiervon läßt sich mit dieser Prüfeinrichtung während des Durchgangs des Meßkolbens
durch den Eichbehälter nur ein Meßzyklus durchführen.

Aufgabe der Erfindung ist es, die Prüfeinrichtung
ohne wesentlichen Mehraufwand an Bauteilen und
ohne zusätzl-iche Hindurchführung von Teilen durch
die Eichbehälterwand vom Schaltverhalten des Signalgebers unabhängig zu machen und die Meßgenauigkeit
der Prüfeinrichtung zu verbessern.

Die Lösung dieser Aufgabe wird in den kennzeichnenden
Merkmalen des Patentanspruchs 1 gesehen.

Durch die Anordnung zweier Signalauslöseringe am
Meßkolben, deren Abstand das Eichvolumen zwischen
sich einschließt, und durch das Zusammenwirken
dieser beiden Signalauslöseringe mit einem gemeinsamen, in der Eichbehälterwand vorgesehenen Signalgeber wird ein möglicherweise vorhandenes verzögertes
Schaltverhalten des Signalgebers beim Start durch
das gleiche verzögerte Verhalten beim Stopp wieder ausgeglichen, so daß in baulich einfacher Weise eine
zuverlässige Signalgabe gewährleistet ist. Da
die beiden Signalauslöseringe sich ohne weiteres
mit genau den gleichen Abmessungen fertigen lassen,
überfährt der eine Signalauslösering des Meßkolbens

- 3 -                    0147806

den Signalgeber beim Start des Meßzyklus zu den
gleichen Bedingungen wie der andere Signalauslösering,
der den Signalgeber am Ende des Meßzyklus überfährt
und dadurch das Stoppsignal auslöst. Da jetzt nur
noch ein einziger Signalgeber in den Außenmantel
des Eichbehälters einzusetzen ist, entfällt außerdem
die bisher für den zweiten Signalgeber erforderliche
Durchbrechung des Behältermantels und die damit erforderliche Abdichtung nach außen.

In Weiterentwicklung der Erfindung wird gemäß dem
Merkmal des Anspruchs 2 vorgeschlagen, in Behälterlängsrichtung hintereinander und/oder in Behälterumfangsrichtung versetzt zueinander mehrere voneinander unabhängige Signalgeber zur Durchführung mehrerer
zeitverschobener und/oder zeitgleicher Meßzyklen
in der Eichbehälterwand einzusetzen. Dadurch wird
es möglich, den gleichen Durchflußmesser während
eines Durchganges des Meßkolbens durch den Eichbehälter mehrmals nacheinander zu prüfen. Die Signalgeb-er sind in diesem Fall in Behälterlängsrichtung
hintereinander angeordnet.

Die verschiedenen Meßzyklen können auch phasenverschoben zueinander ablaufen, wenn mehrere Signalgeber
in einem geringeren Abstand als dem der beiden
Signalauslöseringe des Meßkolbens in Behälterlängsrichtung hintereinander angeordnet sind. Dadurch
lassen sich möglicherweise durch ungleichförmigen
Durchfluß verursachte Unterschiede im Prüfergebnis
vermitteln, wodurch die Meßgenauigkeit noch weiter
verbessert wird. Werden dagegen mehrere Signalgeber
in Umfangsrichtung versetzt zueinander in der Eichbehälterwand eingesetzt, so können mehrere Meßzyklen
gleichzeitig ablaufen, so daß sich mehrere in Reihe geschaltete Durchflußmesser zur gleichen Zeit mit der Prüfeinrichtung prüfen lassen. Damit ausreichender Platz für den Einbau dieser Signalgeber in dem Behältermantel vorhanden ist, können die Signalgeber auch axial zueinander und gleichzeitig radial zueinander versetzt angeordnet sein.

Eine konstruktiv einfache Halterung des zweiten Signalauslöseringes am Meßkolben ergibt sich nach den Merkmalen des Anspruchs 3 dadurch, daß der mit dem ersten Signalauslösering versehene Meßkolben fest mit dem einen Ende eines Abstandsrohres verbunden ist, das an seinem anderen Ende einen Haltering trägt, an dem der zweite Signalauslösering befestigt ist.

Hierbei wird entsprechend dem Anspruch 4 vorgeschlagen, den Haltering des zweiten Signalauslöseringes mit einer Gleitführung für den Meßzylinder des Eichbehälters zu versehen, wodurch eine besonders kippsichere Führung des darin gleitenden Meßkolbens erzielt wird.

Die Meßgenauigkeit der Prüfeinrichtung läßt sich nach den Merkmalen des Anspruchs 5 noch weiter dadurch erhöhen, daß der Meßzylinder des Eichbehälters im Bereich der Anlaufstrecke mit einer Anzahl auf dem Umfang verteilter Umströmungskanäle versehen ist und der Haltering für den zweiten Signalauslösering des Meßkolbens eine Anzahl axialer Durchströmöffnungen und/oder das Abstandsrohr des Meßkolbens eine Anzahl radialer Durchströmöffnungen trägt. Über diese Umströmungskanäle in der Meßzylinderwand in Verbindung mit den Durchströmöffnungen im Haltering und/oder im Abstandsrohr des Meßkolbens kann die im Eichbehälter aufsteigende und den Meßkolben verdrängende Meßflüssigkeit im Bereich der Anlaufstrecke den

0147806

Meßkolben bypaßartig umströmen, so daß der Meßkolben aus seiner unteren Hubendstellung verzögert anläuft. Dadurch steht genügend Zeit für das Schließen des Umschaltventils zur Verfügung und die im Eichbehälter auftretende und durch den Umschaltvorgang beunruhigte Strömung hat ausreichend Zeit sich zu beruhigen, bevor der eine Signalauslösering am Anfang der Meßstrecke den Signalgeber überfährt und dadurch den Startimpuls auslöst.

Durch diese infolge der verringerten Beschleunigung des Meßkolbens ausgelöste Beruhigungsphase der Meßflüssigkeit wird einerseits die Ansprechgenauigkeit der Prüfvorrichtung noch weiter verbessert und andererseits läßt sich die Bauhöhe des Eichbehälters aufgrund der langsamen Anfangsbewegung des Meßkolbens verringern. Über die Durchströmöffnungen im Haltering und im Abstandsrohr kann die Meßflüssigkeit während der Anlaufphase frei zum Behälteraustritt abströmen und gleichzeitig läßt sich hierbei eine sichere Durchspülung der zwischen dem Meßkolben und dem Haltering vorhandenen Ringkammer und des Innenraumes des Abstandsrohres erzielen, so daß sich weder in der Ringkammer noch im Inneren des Abstandsrohres Schmutzteilchen ablagern können. Außerdem wird hierdurch ein intensiver Temperaturausgleich zwischen den Kolbenteilen und der Meßflüssigkeit erzielt.

Zweckmäßigerweise trägt der Meßzylinder des Eichbehälters im Bereich der Anlaufstrecke entsprechend dem Merkmal des Anspruchs 6 innen auf dem Umfang verteilte Umströmungslängsnuten, die geradlinige und leicht herzustellende Drosselkanäle bilden, über die der Meßkolben umlenkungsfrei und über die Länge der Längsnuten gleichbleibend umströmt werden kann.

Weisen die Umströmungslängsnuten hierbei entsprechend Anspruch 7 unterschiedlich lange Auslaufenden auf, so wird der sich im Bereich der Anlaufstrecke bewegende Meßkolben stufenartig beschleunigt, so daß der Meßkolben dadurch gleichmäßiger auf seine Endgeschwindigkeit gebracht wird und die vom Meßkolben verdrängte Flüssigkeitssäule geringeren Druckstößen ausgesetzt ist. Die sich an die Umströmungslängsnuten anschließende Beruhigungsstrecke kann deshalb sehr kurz gehalten werden, ohne die hohe Meßgenauigkeit der Prüfeinrichtung nachteilig zu beeinträchtigen.

Eine besonders intensive Durchspülung des Innenraums des Abstandsrohres beim Umströmen des Meßkolbens wird dadurch erzielt, daß gemäß Anspruch 8 die radialen Druckströmöffnungen des Meßkolbens im Bereich des zum Eichbehältereintritt zeigenden Endes im Abstandsrohr vorgesehen sind. Durch den Eintritt der Umströmungsflüssigkeit am Anfang des Abstandsrohres wird das Abstandsrohr auf seiner ganzen Länge durchspült.

Die Erfindung wird anhand von Ausführungsbeispielen in der Zeichnung näher erläutert, und zwar zeigt

Fig. 1 die in eine Rohrleitung eingebaute Prüfeinrichtung mit Bypaß, Eichbehälter und Umschaltventil in Ansicht,

Fig. 2 den Eichbehälter nach Fig. 1 mit Meßkolben im Längsschnitt in vergrößertem Maßstab und

Fig. 3 einen anders ausgebildeten Eichbehälter mit Meßkolben im Längsschnitt.

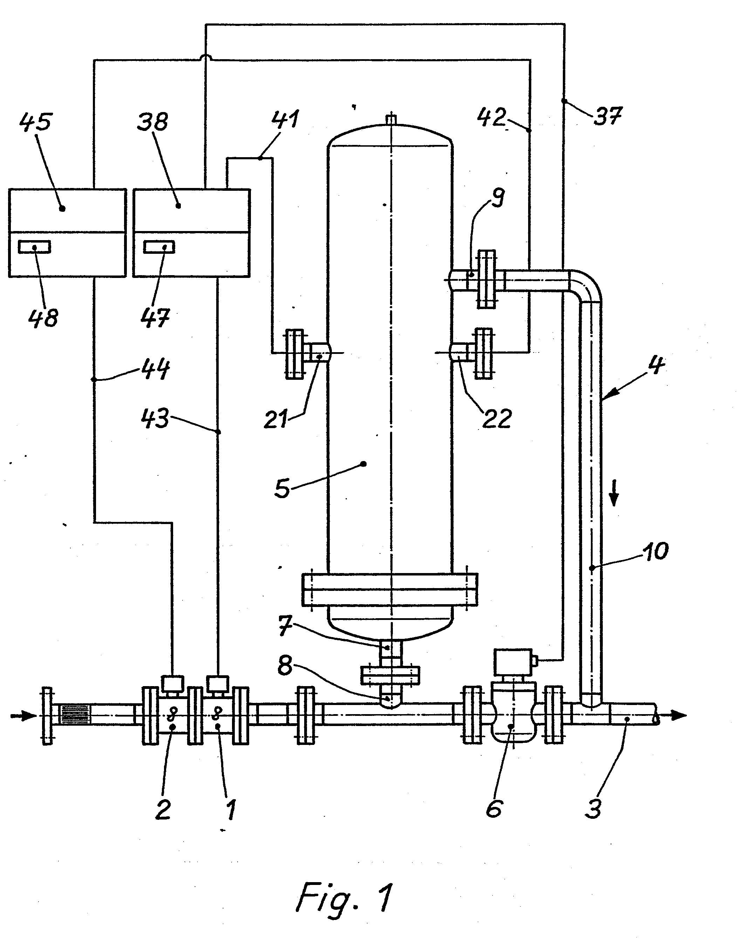

Wie die Fig. 1 zeigt, sind zwei zu prüfende Durchflußmesser 1 und 2 in Reihe/in der von der Meßflüssigkeit
durchströmten Rohrleitung 3 eingebaut. Die Prüfeinrichtung für die beiden Durchflußmesser 1 und 2 besteht
aus einem in einem Bypass 4 der Rohrleitung 3 senkrecht angeordneten zylindrischen Eichbehälter 5, der
nach Schließen des Umschaltventils 6 von der in der
Rohrleitung 3 strömenden Flüssigkeit von unten nach
oben durchflossen wird und dadurch mit den Durchflußmessern 1 und 2 in Reihe schaltbar ist. Der Eintritt
der Meßflüssigkeit in den Eichbehälter 5 erfolgt über
den mit einem Anschlußflansch versehenen Eintrittsstutzen 7 des Eichbehälters, der an den Gegenflansch
des Abzweigstutzens 8 der Rohrleitung 3 angeschlossen
ist. Die Meßflüssigkeit tritt über den Austrittsstutzen 9 wieder aus dem Eichbehälter 5 aus, an
dem die mit einem Gegenflansch versehene und wieder
in die Rohrleitung 3 mündende Austrittsleitung 1o
des Bypasses 4 angeschlossen ist.

Der in der Fig. 2 näher gezeigte Eichbehälter 5 trägt
in seinem Innern einen Meßzylindermantel 11, in dem
der Meßkolben 12 gleitet. Zwischen dem Mantel 13
des Eichbehälters 5 und dem Meßzylindermantel 11
befindet sich der Druckausgleichsraum 14, so daß der
Meßzylindermantel 11 druckausgeglichen ist und dem
Meßkolben 12 dadurch eine genaue Paßführung gibt.
Der Meßkolben 12 trägt einen ersten Signalauslösering 15 und ist mit dem unteren Ende 16 eines Abstandsrohres 17 fest verbunden. Am oberen Ende 18
des Abstandsrohres 17 sitzt ein Haltering 19, der
den zweiten Signalauslösering 2o trägt. Die beiden
Signalauslöseringe 15 und 2o bestehen aus ferromagnetischem Werkstoff und sind soweit voneinander entfernt angeordnet, daß sie das Eichvolumen der
Meßstrecke zwischen sich im Meßzylindermantel 11
einschließen. Der Mantel 13 des Eichbehälters 5
ist mit zwei in gleicher Höhe gegenüberliegenden
Meßstutzen 21 und 22 versehen, in die je ein Signalgeber 23 und 24 eingesetzt ist. Die beiden Signalgeber 23 und 24 arbeiten unabhängig voneinander und
sind für die getrennte Durchführung zweier gleichzeitig ablaufender Meßzyklen bestimmt, wobei beim
Vorbeibewegen des oberen Signalauslöseringes 2o
jeweils das Startsignal an den beiden Signalgebern
23 und 24 und beim Vorbeibewegen des unteren Signalauslöseringes 15 das Stoppsignal für die beiden
Meßzyklen ausgelöst wird.

Der Meßkolben 12 ist durch einen Kolbenringsatz 25
dichtend im Meßzylindermantel 11 geführt, während
der über das Abstandsrohr 17 fest mit dem Meßkolben
12 verbundene Haltering 19 einen Gleitführungsring 26 trägt, der den Meßkolben 12 sicher vor einem
Verkanten im Meßzylindermantel 11 schützt. Der den
oberen Signalauslösering 2o tragende Haltering 19
ist mit einer Anzahl axialer Durchströmöffnungen 27
versehen, die die zwischen dem Meßkolben 12 und dem
Haltering 19 vorhandene Ringkammer 28 offen mit dem
darüberliegenden Meßzylinderraum 29 verbinden. Außerdem trägt das Abstandsrohr 17 eine Anzahl radialer
Durchströmöffnungen 3o. Über diese Durchströmöffnungen
27 und 3o werden die Ringkammer 28 und auch der Innenraum 31 des Abstandsrohres 17 beim Umströmen des Meßkolbens 12 durchspült.

Der Meßkolben 12 ruht bei Beginn des Prüfvorganges
auf dem unteren als Hubanschlag dienenden Rohrabschnitt 32. Im Bereich der Anlaufstrecke 33 ist
der Meßzylindermantel 11 innen mit einer Anzahl auf
dem Umfang verteilter Umströmungslängsnuten 34 versehen, die nach oben hin in unterschiedlicher Höhe
auslaufen. Durch die am Eintritt des Eichbehälters 5 vorgesehene Trennwand 35, die gleichzeitig den
Meßzylindermantel 11 lagefixiert, ist die Eintrittsflüssigkeit im Eichbehälter von der Austrittsflüssigkeit getrennt. Das Ausströmen der im Meßzylindermantel
11 durch den Meßkolben 12 verdrängten Flüssigkeit
erfolgt über die Mantelöffnungen 36.

Die in den Fig. 1 und 2 gezeigte Prüfeinrichtung arbeitet wie folgt:
Vor Beginn des Prüfvorganges ist das Umschaltventil 6
geöffnet, so daß die Meßflüssigkeit geradlinig durch
die Rohrleitung 3 strömt. Der Meßkolben 12 ruht
noch in seiner unteren Hubendstellung auf dem Rohrabschnitt 32. Bei Beginn des Prüfvorganges wird der
Schließvorgang des Umschaltventils 6 über die Steuerleitung 37 vom Auswerter 38 ausgelöst, so daß in der
Ventilschließstellung die gesamte die Durchflußmesser
1 und 2 passierende Meßflüssigkeit durch den Eichbehälter 5 und den Bypass 4 strömt. Die über den
Eintrittsstutzen 7 in den Eichbehälter 5 einströmende
Meßflüssigkeit verdrängt den Meßkolben 12 nach oben,
wobei ein Teil der Meßflüssigkeit den Meßkolben 12
über die als Drosselöffnungen wirkenden Umströmungslängsnuten 34 im Meßzylindermantel 11 nach oben umströmt, so daß der Meßkolben 12 verzögert anläuft.
Dadurch steht ausreichend Zeit bis zum vollständigen
Schließen des Umschaltventventils 6 und zum Beruhigen
der durch den Umschaltvorgang beunruhigten Meßflüssigkeit zur Verfügung, bevor der eigentliche Meßzyklus
durch Überfahren der Signalgeber 23 und 24 beginnt.

Der den Meßkolben 12 über die Umströmungslängsnuten 34
umgehende Teilstrom der Meßflüssigkeit wird über die
Durchströmöffnungen 27 des Halteringes 19 und die
Durchströmöffnungen 30 des Abstandsrohres 17 frei
nach oben abgeleitet und kann über die Mantelöffnungen
36 zum Austrittsstutzen 9 des Eichbehälters 5 strömen.

Der nach oben verdrängte Meßkolben 12 wird beim Überfahren der Enden 39 der Längsnuten 34 auf seine Endgeschwindigkeit beschleunigt, wobei diese Beschleunigung durch die in unterschiedlicher Höhe liegenden Längsnutenenden stufenartig und dadurch gleichmäßiger erfolgt. Der sich an die Umströmungslängsnuten 34 anschließende Beruhigungsabschnitt 4o der Anlaufstrecke 33 kann deshalb sehr kurz gehalten werden.

Ist der Meßkolben 12 so weit von der Meßflüssigkeit nach oben verdrängt worden, daß der obere Signalauslösering 2o des Halteringes 19 die beiden Signalgeber 23 und 24 überfährt und hierbei auf die Magnetfelder dieser Signalgeber einwirkt, lösen die beiden Signalgeber 23 und 24 über die Steuerleitungen 41 und 42 das Startsignal für die Aufaddierung der von den beiden Durchflußmessern 1 und 2 kommenden Impulse aus. Die vom Durchflußmesser 1 abgegebenen Impulse werden hierbei über die Impulsleitung 43 dem Auswerter 38 zugeführt, während die Aufaddierung der vom Durchflußmesser 2 kommenden Impulse getrennt hiervon über die Impulsleitung 44 im zweiten Auswerter 45 erfolgt. Ist das Eichvolumen der Meßstrecke vom Meßkolben 12 verdrängt worden, überfährt der untere Signalauslösering 15 des Meßkolbens die beiden Signalgeber 23 und 24, wodurch über die beiden Steuerleitungen 41 und 42 das Stoppsignal auf die beiden Auswerter 38 und 45 übertragen und die Aufaddierung der von den Durchflußmessern 1 und 2 kommenden Impulse unterbrochen wird. Gleichzeitig wird das Öffnen des Umschaltventils 6 über die Steuerleitung 37 selbsttätig vom Auswerter 38 eingeleitet. Während des Ventilöffnungsvorganges wird der Meßkolben 12 noch weiter nach oben verdrängt, wobei die Kolbenbewegung nach
Überfahren der Mantelöffnungen 36 durch den dann
nur noch verbleibenden oberen Drosselaustritt
46 gedämpft wird.

In den beiden Auswertern 38 und 45 werden die sich
aus den aufaddierten Impulsen ergebenden Flüssigkeitsmengen mit dem verdrängten Eichvolumen der
Meßstrecke verglichen und die Meßfehler der beiden
Durchflußmesser 1 und 2 werden in den Fenstern 47
und 48 angezeigt. Ist das Umschaltventil 6 wieder
vollständig geöffnet, wandert der Meßkolben 12
durch sein Eigengewicht zurück in die Ausgangsstellung.

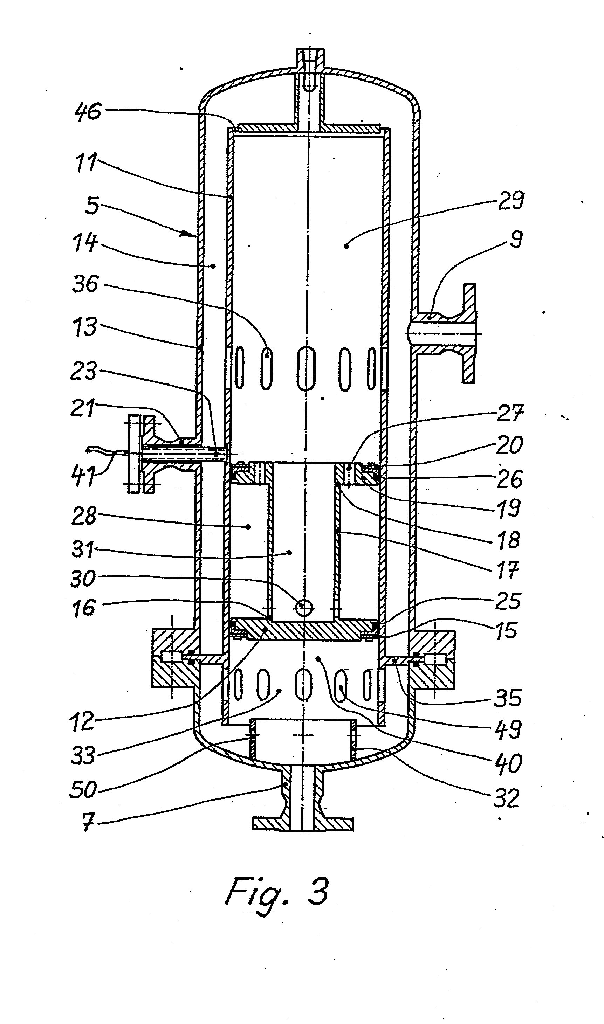

Bei dem Ausführungsbeispiel nach Fig. 3 ist der
Eichbehälter 5 in Kurzbaulänge ausgeführt, wobei
die Anlaufstrecke 33 kürzer gehalten ist. Anstelle
der Umströmungslängsnuten sind hier im Bereich der
Anlaufstrecke 33 Umströmungsschlitze 49 im Meßzylindermantel 11 vorgesehen, so daß der Meßkolben
12 in der Anfangsphase seiner Aufwärtsbewegung
über die Bohrungen 5o des unteren Rohrabschnittes
32 und die Umströmungsschlitze 49 teilweise von der
Meßflüssigkeit umflossen wird. Auch hier verläuft
der Anlauf des Meßkolbens 12 solange mit verringerter
Beschleunigung, bis die Umströmungsschlitze 49
vollständig vom Kolbenring 25 des Meßkolbens 12
überfahren sind. Erst dann erreicht der Meßkolben
12 im Bereich des Beruhigungsabschnittes 4o seine
volle Endgeschwindigkeit. Wegen der kurzen Anlaufstrecke 33 ist das Umschaltventil 6 hier als besonders schnell schließendes Ventil ausgebildet.
Der Eichbehälter 5 ist bei dem Ausführungsbeispiel
nach Fig. 3 mit einem einzigen Signalgeber 23 für
die Prüfung nur eines Durchflußmessers ausgerüstet.

Patentansprüche

1. Prüfeinrichtung für in eine Rohrleitung eingesetzte Durchflußmesser, die aus einem in einer Bypaßleitung der Rohrleitung eingebauten und durch ein Umschaltventil wahlweise in Reihe mit dem Durchflußmesser schaltbaren zylindrischen Eichbehälter besteht, in dem ein von der zu messenden Flüssigkeit verdrängter Meßkolben mit am Umfang vorgesehenem Signalauslösering gleitet, der jeweils beim Überfahren des Meßstreckenanfangs und -endes durch Zusammenwirken mit einem in der Eichbehälterwand sitzenden Signalgeber berührungslos einen Start- und Stoppimpuls auslöst, durch die die vom zu prüfenden Durchflußmesser abgegebenen Impulse aufaddiert und mit dem Eichvolumen der Meßstrecke in Beziehung gesetzt werden, d a - d u r c h   g e k e n n z e i c h n e t, daß der den Signalauslösering (15) tragende Meßkolben (12) über ein Distanzteil (17) fest mit einem zweiten Signalauslösering (2o) verbunden ist und der Abstand zwischen diesen beiden Signalauslöseringen (15, 2o) so groß ist, daß er multipliziert mit der lichten Behälterquerschnittsfläche das Eichvolumen der Meßstrecke bestimmt, wobei ein Signalgeber (23) in der Eichbehälterwand (13) eingesetzt ist, der im Zusammenwirken mit den beiden Signalauslöseringen (15, 2o) des
Meßkolbens (12) sowohl den Startimpuls als auch
den Stoppimpuls für einen Meßzyklus abgibt.

2. Prüfeinrichtung nach Anspruch 1, d a d u r c h
g e k e n n z e i c h n e t, daß in Behälterlängsrichtung hintereinander und/oder in Behälterumfangsrichtung versetzt zueinander mehrere voneinander
unabhängige Signalgeber (23, 24) zur Durchführung
mehrerer zeitverschobener und/oder zeitgleicher
Meßzyklen in der Eichbehälterwand (13) eingesetzt
sind.

3. Prüfeinrichtung nach Anspruch 1 oder 2, d a -
d u r c h g e k e n n z e i c h n e t, daß der
mit dem ersten Signalauslösering (15) versehene Meßkolben (12) fest mit dem einen Ende (16) eines Abstandsrohres (17) verbunden ist, das an seinem
anderen Ende (18) einen Haltering (19) trägt,
an dem der zweite Signalauslösering (2o) befestigt
ist.

4. Prüfeinrichtung nach Anspruch 3, d a d u r c h
g e k e n n z e i c h n e t, daß der Haltering
(19) des zweiten Signalauslöseringes (2o) mit
einer Gleitführung (26) für den Meßzylinder (11)
des Eichbehälters (5) versehen ist.

5. Prüfeinrichtung nach einem oder mehreren der Ansprüche 1 bis 4, d a d u r c h g e k e n n -
z e i c h n e t, daß der Meßzylinder (11) des
Eichbehälters (5) im Bereich der Anlaufstrecke
(33) mit einer Anzahl auf dem Umfang verteilter Umströmungskanäle (34, 49)  für den Meßkolben
(12) versehen ist und der Haltering (19) für den
zweiten Signalauslösering (2o) des Meßkolbens (12)
mit einer Anzahl axialer Durchströmöffnungen (27)
und/oder das Abstandsrohr (17) des Meßkolbens (12)
mit einer Anzahl radialer Durchströmöffnungen (3o)
versehen ist.

6. Prüfeinrichtung nach Anspruch 5, d a d u r c h
g e k e n n z e i c h n e t, daß der Meßzylinder
(11) des Eichbehälters (5) im Bereich der Anlaufstrecke (33) innen auf dem Umfang .verteilte Umströmungslängsnuten (34) trägt.

7. Prüfeinrichtung nach Anspruch 6, d a d u r c h
g e k e n n z e i c h n e t, daß die Umströmungslängsnuten (34) unterschiedlich lange Auslaufenden
(39) aufweisen.

8. Prüfeinrichtung nach den Ansprüchen 5 bis 7,
d a d u r c h   g e k e n n z e i c h n e t,
daß die radialen Durchströmöffnungen (3o) des Meßkolbens (12) im Bereich des zum Eichbehältereintritt (7) zeigenden Endes (16) im Abstandsrohr
(17) vorgesehen sind.

Fig. 1

0147806

Fig. 2

Fig. 3